# EUROPEAN PATENT APPLICATION

(11) **EP 4 465 406 A1**
(43) Date of publication of application: **20.11.2024**
(21) Application number: 23740519.6
(22) Date of filing: 13.01.2023
(51) Int. Cl.: H01M 10/058, H01M 10/0585, H01M 10/0565, H01M 10/0567, H01M 10/052, H01M 50/46, H01M 50/449, H01M 10/6553, H01M 10/0583, H01M 10/0569

(54) **METHOD FOR MANUFACTURING SECONDARY BATTERY**

(30) Priority: 14.01.2022 KR 20220005910; 14.01.2022 KR 20220006029
(71) Applicant: LG Energy Solution, Ltd., Seoul 07335 (KR)
(72) Inventor: YOON, Yeo Min, Daejeon 34122 (KR); KIM, Je Young, Daejeon 34122 (KR); RYU, Ji Hoon, Daejeon 34122 (KR); KIM, Dong Kyu, Daejeon 34122 (KR); LIM, Tae Seob, Daejeon 34122 (KR)
(74) Representative: Goddar, Heinz J.
(86) International application number: PCT/KR2023/000696
(87) International publication number: WO 2023/136676

(57) **Abstract**

The present invention provides a method for manufacturing a secondary battery, the method including (S1) accommodating an electrode assembly in a battery case, (S2) injecting a first electrolyte composition into the battery case to impregnate the electrode assembly, (S3) injecting a second electrolyte composition into the battery case, and (S4) curing the second electrolyte composition, wherein an electrode tab is connected to the electrode assembly, wherein the electrode tab protrudes to the outside of the electrode assembly, the first electrolyte composition includes a 1-1st lithium salt containing at least one selected from the group consisting of lithium bis(fluorosulfonyl)imide (LiFSI) and lithium bis(trifluoromethanesulfonyl)imide (LiTFSI), and a first solvent, the second electrolyte composition includes an oligomer and a second solvent, and the second electrolyte composition does not include lithium bis(fluorosulfonyl)imide (LiFSI) and lithium bis(trifluoromethanesulfonyl)imide (LiTFSI) .

## Description

### Cross-reference to Related Applications

This application claims the benefit of Korean Patent Application Nos. 10-2022-0005910, filed on January 14, 2022, and 10-2022-0006029, filed on January 14, 2022, in the Korean Intellectual Property Office, the disclosures of which are incorporated herein in their entirety by reference.

### TECHNICAL FIELD

The present disclosure relates to a method for manufacturing a secondary battery.

### BACKGROUND ART

As technology development and demand for electronic devices have increased, the demand for secondary batteries as an energy source has been rapidly increased, and among such secondary batteries, lithium secondary batteries having high energy density and voltage have been commercialized and widely used.

The secondary battery may be manufactured by, for example, accommodating an electrode assembly in which electrodes and a separator are alternately stacked and an electrode tab connected to the electrode assembly in a battery case, and injecting an electrolyte into the battery case and then sealing the battery case.

As an electrolyte for a typical secondary battery, a liquid electrolyte, particularly an ionic conductive organic liquid electrolyte in which a salt is dissolved in a nonaqueous organic solvent has been mainly used. However, such a liquid electrolyte has problems of the possibility of leakage to the outside of a secondary battery, degradation in safety, and degradation in cell rigidity.

In this regard, research has been conducted to commercialize a polymer electrolyte such as a gel polymer electrolyte instead of a liquid electrolyte. The gel polymer electrolyte is advantageous in that the leakage to the outside of a secondary battery may be prevented and the cell rigidity is excellent. However, a gel polymer electrolyte has problems of higher interfacial resistance and lower ionic conductivity than a liquid electrolyte.

Meanwhile, in consideration of resistance reduction and thermal stability of secondary batteries, a method of using a lithium salt such as lithium bis(fluorosulfonyl)imide (LiFSI) is being considered, but a lithium salt such as lithium bis(fluorosulfonyl)imide has a problem of corroding an electrode tab of a secondary battery, so that there is a concern from the perspective of long-term lifespan properties.

### SUMMARY

An aspect of the present disclosure is to provide a method for manufacturing a secondary battery in which the resistance of a secondary battery is reduced, and at the same time, the cell rigidity and thermal stability thereof are improved, and corrosion of an electrode tab is prevented, which is advantageous from the perspective of long-term lifespan.

The present disclosure provides a method for manufacturing a secondary battery, the method including (S1) accommodating an electrode assembly in a battery case, (S2) injecting a first electrolyte composition into the battery case to impregnate the electrode assembly, (S3) injecting a second electrolyte composition into the battery case, and (S4) curing the second electrolyte composition, wherein an electrode tab is connected to the electrode assembly, wherein the electrode tab protrudes to an outside of the electrode assembly, the first electrolyte composition includes a 1-1st lithium salt containing at least one selected from the group consisting of lithium bis(fluorosulfonyl)imide (LiFSI) and lithium bis(trifluoromethanesulfonyl)imide (LiTFSI), and a first solvent, the second electrolyte composition includes an oligomer and a second solvent, and the second electrolyte composition does not include lithium bis(fluorosulfonyl)imide (LiFSI) and lithium bis(trifluoromethanesulfonyl)imide (LiTFSI) .

A method for manufacturing a secondary battery according to the present disclosure is characterized by including a process of injecting an electrolyte composition in two steps. A first electrolyte composition is a liquid electrolyte composition or a gel polymer electrolyte composition, which includes lithium bis(fluorosulfonyl)imide and/or lithium bis(trifluoromethanesulfonyl)imide as a lithium salt, and is used for electrode assembly impregnation, and contributes to reducing the resistance of a secondary battery and improving the thermal stability thereof. In addition, a second electrolyte composition does not include lithium bis(fluorosulfonyl)imide and lithium bis(trifluoromethanesulfonyl)imide in the composition, and is cured outside an electrode assembly to form a gel polymer electrolyte. Through the process of electrolyte composition injection in two steps and the curing process as described above, lithium bis(fluorosulfonyl)imide and/or lithium bis(trifluoromethanesulfonyl)imide may only be disposed inside the electrode assembly, which may result in reducing the resistance of the secondary battery, improving the thermal stability thereof, improving cell rigidity, preventing leakage to the outside of the secondary battery, and preventing the corrosion of an electrode tab, thereby improving long-term life performance.

### BRIEF DESCRIPTION OF THE DRAWINGS

FIG. 1 is a view for describing a step (S1) in a method for manufacturing a secondary battery of the present disclosure, and is a plan view for showing that an electrode assembly is accommodated in a battery case.
FIG. 2 is a view for describing the step (S1) in the method for manufacturing a secondary battery of the present disclosure, and is a side view for showing that the electrode assembly is accommodated in the battery case.
FIG. 3 is a view for describing the step (S1) in the method for manufacturing a secondary battery of the present disclosure, and is a schematic side view of the electrode assembly.
FIG. 4 is a view for describing the step (S1) in the method for manufacturing a secondary battery of the present disclosure, and is a schematic side view of a separator.
FIG. 5 is a view for describing the step (S1) in the method for manufacturing a secondary battery of the present disclosure, and is a schematic plan view of the separator or an electrode.
FIG. 6 is a view for describing the step (S1) in the method for manufacturing a secondary battery of the present disclosure, and is a view for describing a process for manufacturing an electrode assembly.
FIG. 7 is a view for describing the step (S1) in the method for manufacturing a secondary battery of the present disclosure, and is a view for describing a process for manufacturing the electrode assembly.
FIG. 8 is a view for describing the step (S1) in the method for manufacturing a secondary battery of the present disclosure, and is a view for describing a process for manufacturing the electrode assembly.
FIG. 9 is a view for describing the step (S1) in the method for manufacturing a secondary battery of the present disclosure, and is a view for describing a process for manufacturing the electrode assembly.
FIG. 10 is a view for describing a step (S2) in the method for manufacturing a secondary battery of the present disclosure, and is a view for describing a process of injecting a first electrolyte composition after the step (S1).
FIG. 11 is a view for describing the step (S2) in the method for manufacturing a secondary battery of the present disclosure, and is a side view for describing a process of injecting the first electrolyte composition after the step (S1).
FIG. 12 is a view for describing a step (S3) in the method for manufacturing a secondary battery of the present disclosure, and is a view for describing a process of injecting a second electrolyte composition after the step (S2).
FIG. 13 is a view for describing a step (S4) in the method for manufacturing a secondary battery of the present disclosure, and is a view for describing a process of curing the second electrolyte composition after the step (S3).
FIG. 14 is a view for describing the step (S4) in the method for manufacturing a secondary battery of the present disclosure, and is a side view for describing the process of curing the second electrolyte composition after the step (S3).
FIG. 15 is a photograph of a surface of a separator included in a secondary battery manufactured by a manufacturing method of Example 1A.

### DETAILED DESCRIPTION

It will be understood that words or terms used in the specification and claims of the present disclosure shall not be construed as being limited to having the meaning defined in commonly used dictionaries. It will be further understood that the words or terms should be interpreted as having meanings that are consistent with their meanings in the context of the relevant art and the technical idea of the disclosure, based on the principle that an inventor may properly define the meaning of the words or terms to best explain the disclosure.

In the present specification, an average particle diameter (D₅₀) may be defined as a particle diameter corresponding to 50% of the volume accumulation in a particle diameter distribution curve of a particle. The average particle diameter (D₅₀) may be measured by, for example, a laser diffraction method. The laser diffraction method generally enables measurement of a particle diameter from a sub-micron region to several millimeters, so that results of high reproducibility and high resolution may be obtained.

Hereinafter, a secondary battery of the present disclosure will be described in detail with reference to the accompanying drawings. In assigning reference numerals to components of each drawing, the same elements may have the same reference numerals when possible even though they are shown in different drawings. In addition, in describing the present disclosure, when it is determined that detailed descriptions of related known compositions or functions may obscure the gist of the present disclosure, the detailed descriptions may be omitted.

### Method for manufacturing secondary battery

The present disclosure relates to a method for manufacturing a secondary battery, and more specifically, to a method for manufacturing a lithium secondary battery.

The present disclosure provides a method for manufacturing a secondary battery, the method including (S1) accommodating an electrode assembly in a battery case, (S2) injecting a first electrolyte composition into the battery case to impregnate the electrode assembly, (S3) injecting a second electrolyte composition into the battery case, and (S4) curing the second electrolyte composition, wherein an electrode tab is connected to the electrode assembly, wherein the electrode tab protrudes to an outside of the electrode assembly, the first electrolyte composition includes a 1-1st lithium salt containing at least one selected from the group consisting of lithium bis(fluorosulfonyl)imide (LiFSI) and lithium bis(trifluoromethanesulfonyl)imide (LiTFSI), and a first solvent, the second electrolyte composition includes an oligomer and a second solvent and the second electrolyte composition does not include lithium bis(fluorosulfonyl)imide (LiFSI) and lithium bis(trifluoromethanesulfonyl)imide (LiTFSI) .

### (1) Accommodating electrode assembly (Step S1)

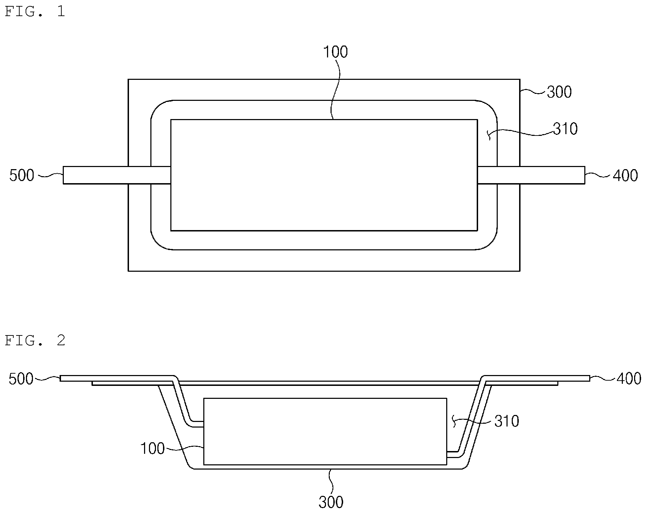

Referring to FIG. 1 and FIG. 2, first, an electrode assembly 100 is accommodated in a battery case 300. At this time, electrode tabs 400 and 500 are connected to the electrode assembly 100, and the electrode tabs 400 and 500 protrude to the outside of the electrode assembly 100.

Hereinafter, the electrode assembly 100, the battery case 300, and the electrode tabs 400 and 500 will be described.

### Electrode assembly

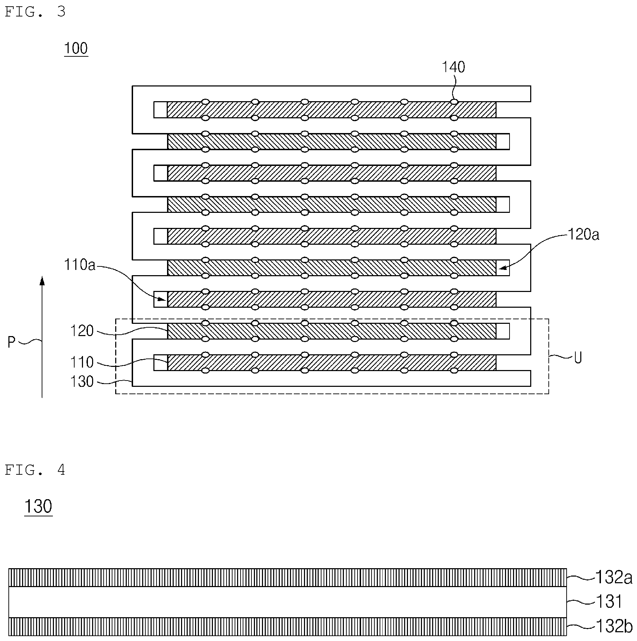

For convenience of description, FIG. 1 and FIG. 2 schematically show the configuration of the electrode assembly 100, and the exemplary configuration of the electrode assembly 100 may be described with reference to FIG. 3 to FIG. 9.

Referring to FIG. 3, in the electrode assembly 100, electrodes 110 and 120 and a separator 130 are alternately stacked, and an adhesive 140 is applied to a surface of at least one of the electrodes 110 and 120 and the separator 130 such that the electrodes 110 and 120 and the separator 130 may be manufactured to be bonded to each other.

The electrode assembly 100 includes a plurality of electrodes 110 and 120 stacked in a vertical direction P. The electrodes 110 and 120 may be provided in plurality of two or more. In the present specification, the "vertical direction" may refer to a vertical direction based on the ground, and is only to describe a stacking direction of electrodes and is not to limit an angle of the stacking direction.

The electrodes 110 and 120 may include a first electrode 110 and a second electrode 120. As illustrated in FIG. 1, the first electrode 110 and the second electrode 120 may be alternately stacked. The electrodes 110 and 120 may be alternately stacked with the separator 130 interposed therebetween. The first electrode 110 may be a positive electrode, and the second electrode 120 may be a negative electrode. Alternatively, the first electrode 110 may be a negative electrode, and the second electrode 120 may be a positive electrode. Each of the first electrode and the second electrode may be one or more, specifically two or more.

The first electrode 110 and the second electrode 120 may have a structure in which an active material slurry is applied to a current collector. The first electrode 110 and the second electrode 120 may have a structure formed by applying, drying, and then roll-pressing the active material slurry on both sides of the current collector. The active material slurry may be formed by adding and then stirring a granular active material, a conductive material, a binder, and the like in a solvent. An active material, a conductive material, a binder, and the like which are used in a positive or negative electrode in the art may be used in the first electrode 110 and the second electrode 120 without limitation.

The current collector is not particularly limited as long as it has high conductivity without causing a chemical change in the battery. Specifically, the current collector may include at least one selected from the group consisting of copper, stainless steel, aluminum, nickel, titanium, fired carbon, and an aluminum-cadmium alloy. For example, when the electrodes 110 and 120 are positive electrodes, a current collector used in the electrodes 110 and 120 may include aluminum, and when the electrodes 110 and 120 are negative electrodes, a current collector used in the electrodes 110 and 120 may include copper.

The current collector may be used in various forms such as a film, a sheet, a foil, a net, a mesh, a porous body, a foam, a non-woven body, and the like. In addition, the current collector may include a polymer layer and a metal layer disposed on both sides of the polymer layer, wherein the metal layer may include at least one selected from the group consisting of copper, stainless steel, aluminum, nickel, titanium, fired carbon, and an aluminum-cadmium alloy.

Specifically, when the electrodes 110 and 120 are negative electrodes, a compound capable of reversible intercalation and de-intercalation of lithium may be used as a negative electrode active material included therein. Specific examples of the negative electrode active material may include a carbonaceous material such as artificial graphite, natural graphite, graphitized carbon fiber, and amorphous carbon; a metallic material alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO (0 < β < 2), SnO₂, a vanadium oxide, and a lithium vanadium oxide; or a composite including the metallic material and the carbonaceous material such as an SiC composite or an Sn-C composite, and any one thereof or a mixture of two or more thereof may be used. Also, a metal lithium thin film may be used as the negative electrode active material. In addition, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, mesocarbon microbeads, mesophase pitches, and high-temperature sintered carbon such as petroleum or coal tar pitch derived cokes.

In addition, specifically, when the electrodes 110 and 120 are positive electrodes, a positive electrode active material included therein is not particularly limited, and the positive electrode active material may be, for example, a positive electrode active material commonly used in the art. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as Li_{1+c1}Mn_{2-c1}O₄ (0≤c1≤0.33), LiMnO₃, LiMn₂O₃, and LiMnO₂; lithium copper oxide (Li₂CuO₂); a vanadium oxide such as LiV₃O₈, V₂O₅, and Cu₂V₂O₇; a Ni-site type lithium nickel oxide represented by the formula LiNi_{1-c2}M_{c2}O₂ (wherein M is any one of Co, Mn, Al, Cu, Fe, Mg, B or Ga, and 0.01≤c2≤0.3); a lithium manganese composite oxide represented by the formula LiMn_{2-c3}M_{c3}O₂ (wherein, M is any one of Co, Ni, Fe, Cr, Zn, or Ta, and 00.01≤c3≤0.1), or by the formula Li₂Mn₃MO₈ (wherein, M is any one of Fe, Co, Ni, Cu, or Zn); LiMn₂O₄ having a part of Li in the formula substituted with an alkaline earth metal ion, and the like, but is not limited thereto. The positive electrode may be a Li-metal positive electrode.

A binder included in the electrode may be any one binder polymer selected from the group consisting of a polyvinylidene fluoride polymer, polyvinyl alcohol, styrene butadiene rubber, polyethylene oxide, carboxyl methyl cellulose, cellulose acetate, cellulose acetate butylate, cellulose acetate propionate, cyanoethylpullulan, cyanoethyl polyvinylalcohol, cyanoethyl cellulose, cyanoethyl sucrose, Pullulan, polymethylmethacrylate, polybutylacrylate, polyacrylonitrile, polyvinylpyrrolidone, polyvinylacetate, ethylene vinyl acetate (polyethylene-co-vinyl acetate, polyarylate, and a low-molecular weight compound having a molecular weight of 10,000 g/mol or less, or a mixture of two or more thereof.

The conductive material included in the electrode is not particularly limited as long as it has conductivity without causing a chemical change in the battery, and for example, graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; metal powder such as fluorocarbon powder, aluminum powder, and nickel powder; a conductive whisker such as zinc oxide and potassium titanate; a conductive metal oxide such as titanium oxide; a conductive material such as a polyphenylene derivative, and the like may be used.

An example of a thickener included in the electrode may be carboxymethylcellulose (CMC).

As illustrated in FIG. 3, the electrode assembly 100 may include the separator 130. The separator is alternately stacked with the electrode.

As illustrated in FIG. 3, the separator 130 may be bent or folded in a zigzag form to wrap around any one end of the electrodes 110 and 120. For example, when the first electrode 110 and the second electrode 120 are alternately stacked as illustrated in FIG. 1, the separator 130 may be bent to wrap around one end 110a of the first electrode 110, and may be bent again to wrap around one end of the second electrode 110, which is present opposite the one end 110a of the first electrode 110. As such bending is repeated, the separator 130 may be bent or folded in a zigzag form. The electrode assembly 100 may include one separator 130.

The electrode assembly 100 may be a zigzag-stacked electrode assembly in which one or more, specifically two or more of basic unit bodies are stacked, the basic unit body in which the separator 130 is bent or folded in a zigzag form, and thus the first electrode 110, the separator 130, the second electrode 120, and the separator 130 are sequentially stacked.

As illustrated in FIG. 4, the separator 130 may include a porous substrate 131 and ceramic coating layers 132a and 132b disposed on both sides of the porous substrate.

The porous substrate 131 is not particularly limited as long as it is commonly used as a separator of a secondary battery. Specifically, the porous substrate 131 having excellent electrolyte impregnation performance as well as low resistance to ion movement in an electrolyte is preferable. More specifically, the porous substrate 131 may include at least one selected from the group consisting of a polyolefin-based resin such as polyethylene, polypropylene, polybutylene, and polypentene; a fluorine-based resin such as polyvinylidenefluoride, polytetrafluoroethylene; a polyester-based resin such as polyethylene terephthalate and polybutylene terephthalate; a polyacrylonitrile resin; and a cellulose-based resin, and may be a porous film or non-woven fabric including any one thereof or a copolymer or mixture of two or more thereof, or a stacked structural body having two or more layers thereof. The porous substrate 131 may be a porous film or non-woven fabric including the polyolefin-based resin, or a stacked structural body having two or more layers thereof.

The size and porosity of pores present in the porous substrate 131 are not particularly limited. Specifically, the porous substrate 131 may be a porous substrate including pores having an average pore diameter of 0.01 um to 1 um, specifically 20 nm to 60 nm, with a pore degree of 10 vol% to 90 vol%, specifically 30 vol% to 60 vol%, and in this case, it is preferable in that the mechanical strength of the porous substrate 131 may be improved, and at the same time, an ionic material may move more smoothly between the positive electrode and the negative electrode. The average pore diameter and porosity may be measured by analysis using a focused ion beam (FIB), a gas adsorption method, or a mercury intrusion porosimetry method.

The thickness of the porous substrate 131 is not particularly limited, but in consideration of suitable mechanical strength as a separator and ease of movement of the ionic material, it may be specifically 1 um to 100 um, specifically 2 um to 15 µm.

The ceramic coating layers 132a and 132b are disposed on both surfaces of the porous substrate 131.

The ceramic coating layers 132a and 132b include inorganic particles and a binder. More specifically, the ceramic coating layer may be composed only of the inorganic particles and the binder.

The inorganic particles may be introduced in terms of preventing heat shrinkage of a porous substrate at high temperatures, and the resulting short circuit of a positive electrode and a negative electrode, wherein the inorganic particles may be provided as a kind of spacer capable of maintaining the physical form of the porous substrate and minimizing the heat shrinkage.

The inorganic particles may be used without particular limitation as long as they are electrochemically stable in an operating voltage range of a battery (e.g., 0 V to 5 V based on Li/Li+ ) and thus do not cause oxidation and/or reduction reactions, that is, an electrochemical reaction. The inorganic particles may be lithium phosphate (Li₃PO₄); lithium titanium phosphate (LiₓTi_{y}(PO₄)₃, 0<x<2, 0<y<3); (LiAlTiP)ₓO_{y}-based glass (0<x<4, 0<y<13) such as lithium aluminum titanium phosphate (LiₓAl_{y}Ti_{z}(PO₄)₃, 0<x<2, 0<y<1, 0<z<3) and 14Li₂O-9Al₂O₃-38TiO₂-39P₂O₅; lithium lanthanum titanate (LiₓLa_{y}TiO₃, 0<x<2, 0<y<3); lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄; lithium nitride (LiₓN_{y}, 0<x<4, 0<y<2) such as Li₃N; SiS₂-based glass (LiₓSi_{y}S_{z}, 0<x<3, 0<y<2, 0<z<4) such as Li₃PO₄-Li₂S-SiS₂; P₂S₅-based glass (LiₓP_{y}S_{z}, 0<x<3, 0<y<3, 0<z<7) such as LiI-Li₂S-P₂S₅; Al₂O₃; AlOOH; BaTiO₃; BaSO₄; MgO; CaO; CeO₂; NiO; SiO₂; SnO₂; SrTiO₃; TiO₂; Y₂O₃; ZnO; ZrO₂; Pb(Zr,Ti)O₃(PZT); Pb₁₋ₓLaₓZr_{1-y}TiyO₃(PLZT); PB(Mg₃Nb_{2/3})O₃-PbTiO₃(PMN-PT); hafnia (HfO₂); a mixture of two or more thereof, or the like. Specifically, the inorganic particles may be Al₂O₃; AlOOH; BaTiO₃; BaSO₄; MgO; CaO; CeO₂; NiO; SiO₂; SnO₂; SrTiO₃; TiO₂; Y₂O₃; ZnO; ZrO₂; Pb(Zr,Ti)O₃(PZT); Pb₁₋ₓLaₓZr_{1-y}TiyO₃(PLZT) ; PB(Mg₃Nb_{2/3})O₃-PbTiO₃ (PMN-PT); hafnia (HfO₂)); a mixture of two or more thereof, or the like, and more specifically, may include at least one selected from the group consisting of Al₂O₃; AlOOH; BaTiO₃; BaSO₄; and MgO.

The average particle diameter (D₅₀) of the inorganic particles may be 0.1 um to 1 um, specifically 0.2 um to 0.7 µm.

The inorganic particles are included in the ceramic coating layers 132a and 132b in an amount of 92 wt% to less than 100 wt%. The content of the inorganic particles should be considered in relation to the content of a binder to be described later, and may be controlled in terms of preventing an increase in resistance caused by an excessive amount of the binder while preventing a decrease in thermal stability due to heat shrinkage of a porous substrate. Specifically, the inorganic particles may be included in the ceramic coating layer in an amount of 93 wt% to 98 wt%.

The binder may be included in the ceramic coating layers 132a and 132b for bonding the inorganic particles and for bonding a separator and an electrode.

At this time, the binder is included in the ceramic coating layers in an amount of greater than 0 wt% to less than 8 wt%. When the binder is included in an amount of greater than 8 wt%, the binder may be excessively included in a ceramic coating layer, and may cause an increase in resistance of a secondary battery. Meanwhile, as the binder is included in the above-described range, there is a risk of degradation in cell rigidity of a secondary battery due to degradation in adhesion between the electrode and the separator, but as described below, the present disclosure uses a separator having the above-described properties and a gel polymer electrolyte in combination, so that it is possible to simultaneously achieve improvement in the cell rigidity and mechanical durability as well as improvement in the resistance of a secondary battery.

Specifically, the binder may be included in the ceramic coating layer in an amount of 2 wt% to 7 wt%, and when in the above range, it is possible to prevent an increase in resistance of a secondary battery while maximally securing the binding force of the inorganic particles.

The binder may be a hydrophobic binder including one or more hydrophobic functional groups such as a fluorine group (-F), an acrylate group (CH₂=CHCOO-), a methacrylate group (CH₂=C(CH₃)COO-), a vinyl acetate group (-CH₂=CHOCO-), a nitrile group (-C=N), or the like; or a hydrophilic binder including one or more polar groups such as a hydroxyl group (-OH), a carboxyl group (-COOH), an anhydrous maleic acid group (-COOOC-), a sulfonic acid group (-SO₃H), or an isocyanate group (-NCO-), and any one thereof or a mixture of two or more thereof may be used. More specifically, the hydrophobic binder may be polyvinylidene fluoride, polyvinylidene fluoride-co-hexafluoropropylene, polyvinylidene fluoride-co-trichloroethylene, polymethylmethacrylate, polyacrylonitrile, polyvinylacetate, polyethylene-co-vinylacetate, polyimide, polyethylene oxide, or the like. Also, the hydrophilic binder may be cyanoethylpullulan, cyanoethylpolyvinylalcohol, cyanoethylcellulose, cyanoethylsucrose, carboxyl methyl cellulose, polyvinylalcohol, polyacrylic acid, polymaleic anhydride, polyvinylpyrrolidone, or the like.

Specifically, the binder may be an acrylic binder. The acrylic binder enables good dispersion with the inorganic particles when providing a ceramic coating layer, and accordingly, may prevent the ceramic coating layer from being layer-separated into having the binder in the upper layer and having the inorganic particles in the lower layer. Since such layer-separation consequently interferes with ion movement in the negative electrode and the positive electrode, and causes an increase in resistance, when an acrylic-based binder is used as the binder, an effect of reducing the resistance, which is an object of the present disclosure, may be exhibited at a more excellent level.

The acrylic binder may include at least one selected from the group consisting of a copolymer of ethylhexyl acrylate and methyl methacrylate; polymethylmethacrylate; polyethylhexylacrylate; polybutylacrylate; polyacrylonitrile; and a copolymer of butyl acrylate and methyl methacrylate.

The ceramic coating layer may include the inorganic particles and the binder at a weight ratio of 92:8 to less than 100:0, specifically at a weight ratio of 93:7 to 98:2.

The thickness of the ceramic coating layers 132a and 132b may be 0.1 um to 10 um, specifically 0.5 um to 5 µm, more specifically 1.0 um to 2.5 um. Since the ceramic coating layers 132a and 132b include the binder in the above-described small content, it is possible to implement a thin separator, thereby further improving energy density of a secondary battery, and achieving low resistance. The thickness of the ceramic coating layer may mean the thickness of one ceramic coating layer formed on one surface of the porous substrate.

The ceramic coating layers 132a and 132b may be manufactured by applying, followed by drying, a composition for forming a ceramic coating layer in which inorganic particles and a binder are dispersed in a solvent on the porous substrate. A method for applying the composition for forming a ceramic coating layer is not particularly limited, and dip coating, die coating, roll coating, comma coating, Gravure coating, and the like may be used, and specifically, Gravure coating may be used. As a method for drying the composition for forming a ceramic coating layer after the application thereof, natural drying, reversible drying, or hot air drying may be used.

The thickness of the separator 130 may be 1 um to 20 um, specifically 5 um to 14 µm, and according to the present disclosure, the content of the binder in the ceramic coating layer is reduced, so that it is possible to implement a thin separator, thereby further improving energy density of a secondary battery, and achieving low resistance.

Since the ceramic coating layer included in the separator includes the binder in a small content as described above, it is possible to prevent an increase in resistance caused by an excessive amount of the binder. Meanwhile, in the case of a secondary battery according to the present disclosure, a gel polymer electrolyte is used as an electrolyte, so that the gel polymer electrolyte may compensate for degradation in cell rigidity of the secondary battery accompanying such resistance reduction. Therefore, a secondary battery manufactured by the method for manufacturing a secondary battery according to the present disclosure may simultaneously improve resistance reduction, cell rigidity, and mechanical durability of the secondary battery according to the combination of the above components.

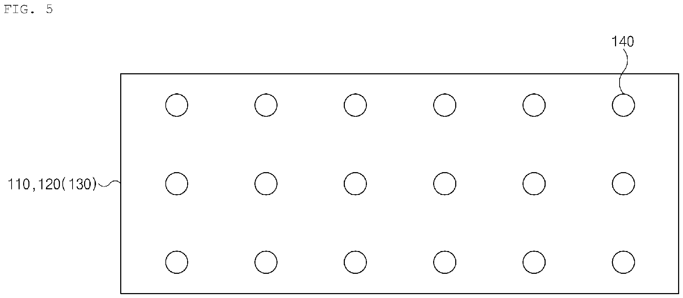

As illustrated in FIG. 3 and FIG. 5, in the electrode assembly 100, the adhesive 140 is applied to a surface of at least one of the electrodes 110 and 120 and the separator 130, so that the electrodes 110 and 120 and the separator 130 may be bonded to each other.

The adhesive 140 may have been introduced for adhesion between the electrodes 110 and 120 and the separator 130. Specifically, in a process of stacking, assembling, and stacking electrodes and separators during the manufacturing process of the secondary battery, the adhesive may have been introduced to fix the alignment position thereof. As described above, the separator 130 according to the present disclosure has a reduced binder content, so that the adhesion between an electrode and a separator may not be sufficient when manufacturing a secondary battery, and since the adhesive 140 addresses the issue by easily bonding the electrode and the separator, and preventing the separator from slipping during a manufacturing process of an electrode assembly, it is possible to improve the efficiency and quality of the process.

The adhesive may be an acrylate-based adhesive. As the above acrylate-based adhesive is used, dissolution and removal of the above-described adhesive may be easily achieved.

Specifically, the acrylate-based adhesive may include a copolymer including a repeating unit derived from at least one monomer selected from the group consisting of methyl methacrylate (MMA), 2-ethylhexyl acrylate (2-EHA), and 2-hydroxyethyl acrylate (2-HEA).

The weight average molecular weight (Mw) of the copolymer may be 120,000 g/mol to 140,000 g/mol. The molecular weight of the copolymer may be measured using a typical method known in the art. For example, the molecular weight may be measured by an end-group quantification method for obtaining a molecular weight by quantitatively analyzing a functional group at an end of a molecular chain, a colligative property utilization method using physical properties such as osmotic pressure, vapor pressure drop, boiling point rise, and solidification point drop (membrane osmosis method, vapor pressure osmosis method, etc.), a light scattering method using light scattering, an ultracentrifugal method for measuring a molecular weight by centrifuging a polymer solution and then analyzing the sedimentation rate or concentration distribution, a viscosity method using the viscosity of a polymer solution, gel permeation chromatography using high performance liquid chromatography (HPLC), and the like.

The adhesive is used for manufacturing an electrode assembly by bonding an electrode and a separator, and after the electrode assembly is accommodated in a battery case and a first electrolyte composition and/or a second electrolyte composition to be described later, specifically the first electrolyte composition, is injected into the battery case, may be dissolved in an organic solvent included in the first electrolyte composition and/or the second electrolyte composition, specifically the first electrolyte composition. Since the adhesive according to the present disclosure is dissolved and removed after being used in the manufacture of the electrode assembly, the electrode and the separator may be easily bonded without an increase in a binder of the separator, and the thickness of the separator is prevented from increasing due to the increase in the binder, so that the energy density of a secondary battery may be further improved.

The adhesive may be applied in the form of a plurality of patterns spaced apart from each other. Specifically, the adhesive may be applied to a surface of at least one of the electrode and the separator in the form of a plurality of patterns spaced apart from each other. Specifically, the adhesive may be applied to the surface of at least one of the electrode and the separator in the form of a plurality of dots spaced apart from each other.

The adhesive is removed by an injection of a first electrolyte composition to be described later, so that a trace of the adhesive application may remain on the surface of the at least one of the electrodes 110 and 120 and the separator 130. Specifically, when the first electrolyte composition is injected into the battery case in which the electrode assembly is accommodated, the adhesive may be dissolved and removed by the organic solvent in the first electrolyte composition and removed, thereby leaving a trace of the adhesive application.

The application area of the adhesive may be greater than 0% to 1% or less, specifically 0.0001% to 0.05%, with respect to the area of a surface where the separator and the electrode are in contact. When in the above range, it is preferable in that the electrode and the separator may be bonded with sufficient adhesion, and at the same time, a problem in which the adhesive is excessively applied and does not dissolve in the solvent and remains, thereby causing an increase in resistance may be prevented.

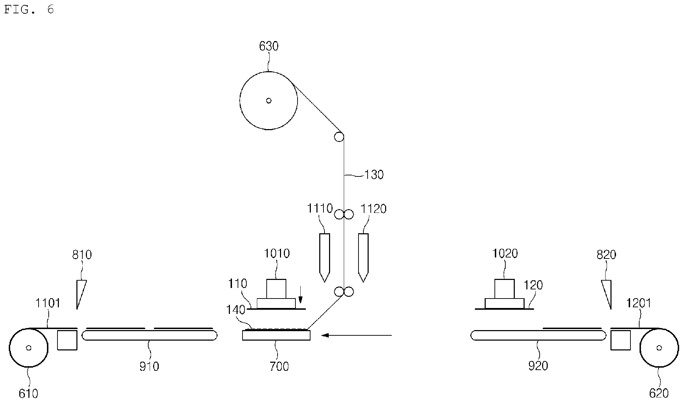

Hereinafter, referring to FIG. 6 to FIG. 9, an exemplary manufacturing method of the electrode assembly will be described.

Specifically, referring to FIG. 6 to FIG. 9, the electrodes 110 and 120 include the first electrode 110 and the second electrode 120, and the electrode assembly 100 may be manufactured by a method including the following steps (a) to (d) :
(a) applying the adhesive 140 on at least a portion of the separator 130 and the first electrode 110;
(b) bonding the separator 130 and the first electrode 110 through the adhesive 140 applied;
(c) folding one side of the separator 130 to cover the first electrode 110;
(d) applying the adhesive 140 on at least a portion of the separator 130 and the second electrode 120;
(e) bonding the separator 130 and the second electrode 120 through the adhesive 140 applied; and
(d) folding the other side of the separator 130 to cover the second electrode 120.

Referring to FIG. 6, the adhesive 140 is applied on at least a portion of the separator 130 and the first electrode 110. The application of the adhesive 140 may be performed by applying the adhesive 140 on at least a portion of the separator 130 and the first electrode 110 with a first nozzle 1110. FIG. 6 illustrates that the adhesive 140 is applied on the separator 130, but without being limited thereto, the adhesive 140 may be applied on a portion of the separator 130, the first electrode 110, or both the separator 130 and the first electrode 110.

As illustrated in FIG. 6, specifically, the separator 130 may be unwound from a separator reel 630 and seated on an upper surface of a table 700.

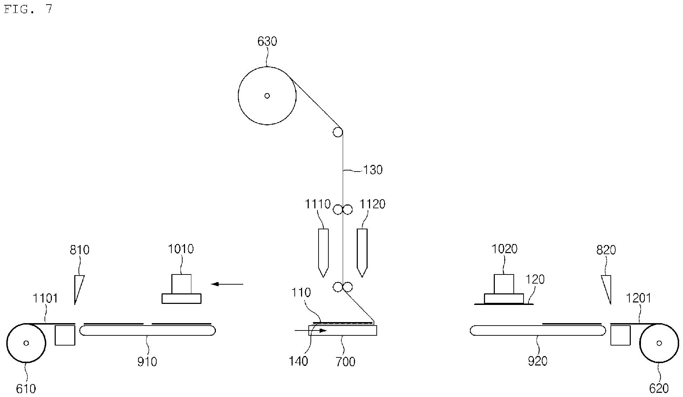

Referring to FIG. 7, the separator 130 and the first electrode 110 are bonded through the applied adhesive 140.

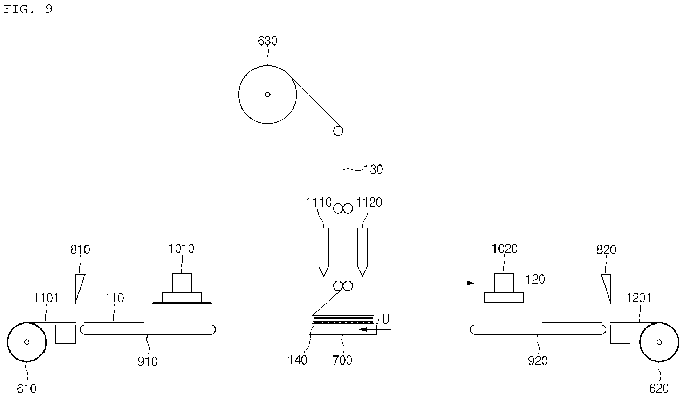

As illustrated in FIG. 9, the first electrode 110 may be formed by cutting a first electrode sheet 1101 unwound onto a first electrode reel 610 by a first cutter 810. At this time, when a first transfer device 910 transfers the first electrode 110, a first header 1010 may adsorb the first electrode. Thereafter, according to movement of the first header 1010 and/or the table 700, the first electrode 110 may be seated or disposed on the separator 130.

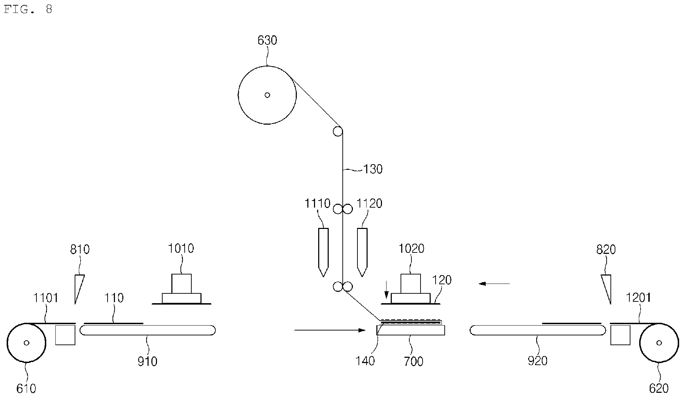

Referring to FIG. 8, one side of the separator 130 is folded to cover the first electrode 110; and the adhesive 140 may be applied on at least a portion of the separator 130 and the second electrode 120.

After the first electrode 110 is attached to the separator 130, the one side of the separator 130 is folded to cover the first electrode 110. For example, the folding of the separator 130 may be performed by lateral movement of the table 700.

Meanwhile, the adhesive 140 is applied on at least a portion of the separator 130 and the second electrode 120. The application of the adhesive 140 may be performed by applying the adhesive 140 on at least a portion of the separator 130 and the second electrode 120 with a second nozzle 1120. FIG. 8 illustrates that the adhesive 140 is applied on the separator 130, but without being limited thereto, the adhesive 140 may be applied on a portion of the separator 130, the second electrode 120, or both the separator 130 and the second electrode 120.

Referring to FIG. 9, the separator 130 and the second electrode 120 are bonded through the applied adhesive 140; and the other side of the separator 130 is folded to cover the second electrode 120.

The second electrode 120 is bonded to the opposite side of the surface of the separator 130 where the separator 130 and the first electrode 110 are in contact.

As illustrated in FIG. 9, the second electrode 120 may be formed by cutting a first electrode sheet 1201 unwound onto a second electrode reel 620 by a second cutter 820. At this time, when a second transfer device 920 transfers the second electrode 120, a second header 1020 may adsorb the second electrode. Thereafter, according to movement of the second header 1020 and/or the table 700, the second electrode may be seated or disposed on the separator.

Referring to FIG. 9, after the second electrode 120 is bonded, the other side of the separator 130 is folded to cover the second electrode 120. Accordingly, it is possible to manufacture an electrode assembly in which a first electrode and a second electrode are alternately stacked, a separator is interposed between the first electrode and the second electrode, and the separator is folded in a zigzag form. Thereafter, by repeating the above-described process, it is possible to implement an electrode assembly in which a plurality of first electrodes and second electrodes are alternately stacked.

At this time, in the case of the electrode assembly including the separator bent in a zigzag form as described above, a phenomenon in which the separator and/or an electrode is slipped due to the bending or folding of the separator occurs in the manufacturing process, which leads to a problem of poor quality, and a decrease in process efficiency, but according to the present disclosure, as an adhesive is applied for bonding an electrode and a separator, the above-described phenomenon of the slipping of an electrode and/or a separator may be prevented to a significant level, and a secondary battery with improved quality may be manufactured. Such adhesive application may be particularly preferable in terms of complementing adhesion of the separator of the present disclosure in which a binder is included in a low content.

### Electrode tab

As illustrated in FIG. 1 and FIG. 2, the electrode tabs 400 and 500 are connected to the electrode assembly 100, and the electrode tabs 400 and 500 protrude to the outside of the electrode assembly 100.

The electrode tabs 400 and 500 may be provided in plurality. Specifically, the plurality of electrode tabs 400 and 500 are connected to the electrodes 110 and 120 of the electrode assembly 100, more specifically, respectively connected to the first electrode 110 and the second electrode 120, and protrude to the outside of the battery case 300 to become a path through which electrons may move. In addition, FIG. 1 and FIG. 2 illustrate that two electrode tabs 400 and 500 are disposed in different directions with respect to the electrode assembly 100, but the two electrode tabs 400 and 500 are not limited thereto, and may protrude side by side in the same direction from one side of the electrode assembly 100.

The plurality of electrode tabs 400 and 500 may be positive tabs and negative tabs, and may be respectively connected to a positive electrode and a negative electrode.

The electrode tab may include aluminum. As to be described later, a first electrolyte composition including at least one selected from the group consisting of lithium bis(fluorosulfonyl)imide and lithium bis(trifluoromethanesulfonyl)imide is not in contact with the electrode tab, so that a risk of damage to the electrode tab due to aluminum corrosion may be significantly reduced, and the long-term lifespan properties may be improved.

Specifically, the electrode tab includes a positive tab and a negative tab, wherein the positive tab may include aluminum, and the negative tab may include nickel.

### Battery case

The battery case 300 may be provided for the purpose of accommodating the electrode assembly 100. In addition, in the battery case 300, a first electrolyte composition 210 to be described layer may be disposed inside the electrode assembly 100, and a second electrolyte composition 220 to be described later may be cured and disposed outside the electrode assembly 100.

The battery case 300 may be a pouch-shaped case made of a flexible material, and may be, for example, an aluminum pouch battery case.

When the battery case 300 is an aluminum pouch battery case, the battery case 300 may be formed of, for example, a pouch film in which a polypropylene layer (a PP layer), an aluminum layer, and a polyethylene terephthalate layer (a PET layer) are stacked in the order from the inside.

The battery case 300 may include a cup portion 310, which is an accommodation space for accommodating an electrode assembly.

The battery case 300 may include a cover 320, and after receiving the electrode assembly, and curing and gelling a gel polymer electrolyte composition, the battery case 300 may be sealed with the cover to manufacture a sealed secondary battery.

### (2) Injection of first electrolyte composition and impregnation of electrode assembly (Step S2)

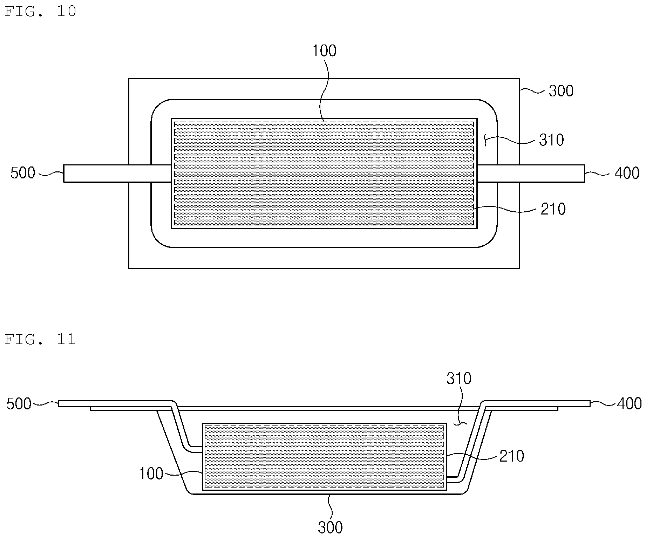

Referring to FIG. 10 and FIG. 11, the first electrolyte composition 210 is injected into the battery case 300 to impregnate the electrode assembly 100. At this time, the first electrolyte composition 210 includes a 1-1st lithium salt including lithium bis(fluorosulfonyl)imide, a first oligomer, and a first solvent.

The first electrolyte composition 210 is introduced to be disposed inside the electrode assembly 100 together with the impregnation of the electrode assembly 100.

Specifically, the first electrolyte composition 210 may be injected so as not to contact the electrode tabs 400 and 500 disposed outside the electrode assembly 100. Through the above, it is possible to prevent corrosion from occurring by contact of lithium bis (fluorosulfonyl) imide included in the first electrolyte composition 210 with the electrode tabs 400 and 500, specifically the electrode tabs 400 and 500 including aluminum.

The first electrolyte composition 210 is injected into the electrode assembly 100 to impregnate the electrode assembly 100. Specifically, the first electrolyte composition 210 impregnates the electrode assembly 100, but may be injected in a pre-calculated amount in consideration of the size, volume, and the like of the electrode assembly 100 so as not to be in contact with the electrode tabs 400 and 500.

The impregnation of the first electrolyte composition 210 may be performed at a temperature of 10 °C to 30 °C for 0.5 hours to 72 hours, preferably at a temperature of 15 °C to 30 °C for 40 hours to 65 hours.

The first electrolyte composition 210 includes a 1-1st lithium salt including at least one selected from the group consisting of lithium bis(fluorosulfonyl)imide (LiFSI, LiN(FSO₂)₂) and Lithium bis(trifluoromethanesulfonyl)imide(LiTFSI, LiN(CF₃SO₂)₂), a first oligomer, and a first solvent.

Since lithium bis(fluorosulfonyl)imide and/or lithium bis (trifluoromethanesulfonyl) imide that may be included in the 1-1st lithium salt are injected into the electrode assembly, there are advantages in that not only the resistance of the electrode assembly may be reduced, but also the thermal stability of a secondary battery may be improved. Meanwhile, since the second electrolyte composition injected and disposed outside the electrode assembly does not include lithium bis(fluorosulfonyl)imide, the possibility of contact of the lithium bis(fluorosulfonyl)imide with the electrode tabs 400 and 500 is significantly less, so that corrosion of the electrode tabs may be prevented.

The 1-1st lithium salt may be included in the first electrolyte composition at a molar concentration of 0.5 M or greater, specifically 0.65 M or greater. When in the above range, effects of reducing the resistance and improving the thermal stability of a secondary battery may more preferably be implemented. The upper limit of the molar concentration of the 1-1st lithium salt is not particularly limited, and may be 5 M or less in terms of easy dissolution of the 1-1st lithium salt. In the present specification, molar concentration means the molar content of a component with respect to the volume of a composition, and the unit "M" of "molar concentration" may mean "mol/L."

The first electrolyte composition may further include a 1-2nd lithium salt, together with the 1-1st lithium salt, for the purpose of further reducing resistance and preventing corrosion.

The 1-2nd lithium salt may include at least one selected from the group consisting of lithium hexafluorophosphate (LiPF₆), lithium perchlorate (LiClO₄), lithium hexafluoroarsenate (LiAsF₆), lithium tetrafluoroborate (LiBF₄), lithium hexafluoroantimonate (LiSbF₆), lithium tetraoxoaluminate (LiAlO₄), lithium tetrachloroaluminate (LiAlCl₄), lithium trifluoromethanesulfonate (LiCF₃SO₃), lithium nonafluorobutanesulfonate (LiC₄F₉SO₃), lithium chloride (LiCl), lithium iodide (LiI), lithium bis(oxalato)borate (LiB(C₂O₄)₂) (LiBOB), lithium bis(pentafluoroethanesulfonyl)imide (LiN(C₂F₅SO₂)₂) (LiBETI), lithium fluoroalkylborate (LiFAB), and lithium 2-trifluoromethyl-4,5-dicyanoimidazole (LiTDI), and specifically, may include LiPF₆.

In the first electrolyte composition, the ratio of the molar concentration of the 1-1st lithium salt to the molar concentration of the 1-2nd lithium salt may be 0.9:1 to 10:1, and when in the above range, the thermal stability of a secondary battery may be improved to a desirable level while reducing the resistance of the secondary battery. In the first electrolyte composition, the ratio of the molar concentration of the 1-1st lithium salt to the molar concentration of the 1-2nd lithium salt may be more specifically 0.9:1 to 5:1, even more specifically 0.9:1 to 1.2:1.

The ratio of the molar concentration of the 1-1st lithium salt with respect to the molar concentration of the 1-2nd lithium salt may be 1.1 or greater, and when in the above range, the thermal stability of a secondary battery may be improved to a desirable level while reducing the resistance of the secondary battery. More specifically, the ratio of the molar concentration of the 1-1st lithium salt with respect to the molar concentration of the 1-2nd lithium salt may be 2.5 or greater. The upper limit of the ratio of the molar concentration of the 1-1st lithium salt with respect to the molar concentration of the 1-2nd lithium salt is not particularly limited, and may be 10 or less, specifically 5 or less.

In the first electrolyte composition, the sum of the molar concentrations of the 1-1st lithium salt and the 1-2nd lithium salt may be 0.7 M or greater, specifically 1.2 M or greater. When in the above range, it is possible to improve the thermal stability of a secondary battery to a desirable level, while reducing the resistance of the secondary battery. The upper limit of the sum of the molar concentrations of the 1-1st lithium salt and the 1-2nd lithium salt is not particularly limited, and may be 5 M or less, specifically 1.8 M or less.

The first solvent may be used for the purpose of dissolution or dispersion of the above-described 1-1st lithium salt. The first solvent may be an organic solvent.

The first solvent is commonly used in a secondary battery, and for example, ether, ester (acetates and propionates), amide, linear carbonate or annular carbonate, nitrile (acetonitrile, SN, etc.), and the like may be used alone or in combination of two or more thereof.

Among the above, a carbonate-based solvent including a cyclic carbonate, a linear carbonate, or a carbonate compound, which is a mixture thereof, may be representatively used.

Specific examples of the cyclic carbonate include a single compound or a mixture of two or more selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and a halide thereof. In addition, specific examples of the linear carbonate compound may include a compound or a mixture of two or more selected from the group consisting of dimethyl carbonate (DMC), diethyl carbonate (DEC), dipropyl carbonate (DPC), ethyl methyl carbonate (EMC), methyl propyl carbonate (MPC), and ethyl propyl carbonate (EPC), but are not limited thereto.

Particularly, among the carbonate-based solvents, propylene carbonate and ethylene carbonate, which are cyclic carbonates, may be preferably used since they are high-viscosity organic solvents which have a high dielectric constant, thereby dissociating a lithium salt in an electrolyte solution well, and such a cyclic carbonate may be further preferably used when mixed with a low-viscosity, low-dielectric constant linear carbonate such as ethyl methyl carbonate, diethyl carbonate, or dimethyl carbonate in a suitable ratio and used, since an electrolyte solution with high electrical conductivity may be prepared.

In addition, as ester in the first solvent, a single compound or a mixture of two or more selected from the group consisting of methyl acetate, ethyl acetate, propyl acetate, methyl propionate, ethyl propionate, γ-butyrolactone, γ-valerolactone, γ-caprolactone, σ-valerolactone, and ε-caprolactone may be used, but is not limited thereto.

The first electrolyte composition 210 may be a liquid electrolyte composition or a gel polymer electrolyte composition.

When the first electrolyte composition 210 is a liquid electrolyte composition, the first electrolyte composition 210 may not include an oligomer for the formation of a gel polymer electrolyte.

When the first electrolyte composition 210 is a gel polymer electrolyte composition, the first electrolyte composition may further include an oligomer. The oligomer may include one or more selected from the group consisting of a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, polyethylene oxide, polyester sulfide, polyvinyl alcohol, and polyvinylidene fluoride, and specifically, may include at least one selected from a fluorine-based oligomer, a polycarbonate-based oligomer, and a polysiloxane-based oligomer.

For example, the fluorine-based oligomer may specifically include a fluorine-based monomer-derived unit. The fluorine-based oligomer has an advantage of further improving battery stability and having excellent flame retardancy in that a fluorine-based functional group included therein suppresses the generation of oxygen radicals caused by the decomposition of a positive electrode active material. More specifically, the fluorine-based oligomer may include at least one selected from a tetrafluoroethylene (TFE)-vinyl acetate copolymer, a (allyl 1,1,2,2-tetrafluoroethyl ether)-(2,2,2-trifluoro ethyl acrylate) copolymer, a tetrafluoroethylene-(2-vinyl-1,3-dioxolane) copolymer, and a tetrafluoroethylene-vinyl methacrylate copolymer.

In addition, the polycarbonate-based oligomer has advantages of being compatible with a positive electrode, having a structure similar to that of an organic electrolyte solution, and having excellent ionic conductivity or ionic dissociation. The polycarbonate-based oligomer may be polycarbonate having a weight average molecular weight of 1,000 g/mol to 50,000 g/mol, specifically 4,500 g/mol to 30,000 g/mol, and more specifically 10,000 g/mol to 25,000 g/mol.

In addition, the polysiloxane-based oligomer may function as a scavenger of a gas (HF, etc.) generated by an electrolyte side reaction, and thus may have an effect of improving high-temperature storage properties.

The weight average molecular weight of the oligomer may be 1,000 g/mol to 50,000 g/mol, specifically 4,500 g/mol to 30,000 g/mol.

The oligomer may be included in the first electrolyte composition in an amount of 0.1 wt% to 30 wt%, specifically 1 wt% to 10 wt%, and when in the above range, ionic conductivity of the gel polymer electrolyte and the mobility of lithium ions may be exerted at an excellent level.

When the first electrolyte composition 210 is a gel polymer electrolyte composition, the first electrolyte composition 210 may be cured after the step S2, if necessary.

The above step is not essential, and as to be described later, the first electrolyte composition 210 and the second electrolyte composition 220 may be cured together in the step S4 after the injection of the second electrolyte composition. However, when a curing process is performed after the impregnation of the first electrolyte composition 210, there are advantages in that the first electrolyte composition 210 may be prevented from flowing out of the electrode assembly 100 before the injection of the second electrolyte composition 220, and the first electrolyte composition 210 and the second electrolyte composition 220 may be prevented from being mixed with each other.

At this time, the curing may be performed at a temperature of 50 °C to 100 °C for 0.5 hours to 48 hours, preferably at a temperature of 60 °C to 80 °C for 0.5 hours to 24 hours.

If the first electrolyte composition 210 is cured after the step S2, the first electrolyte composition 210 may further include a polymerization initiator for polymerizing and cross-linking the oligomer. The type of the polymerization initiator and the like will be described later.

### (3) Injection of second electrolyte composition (Step S3)

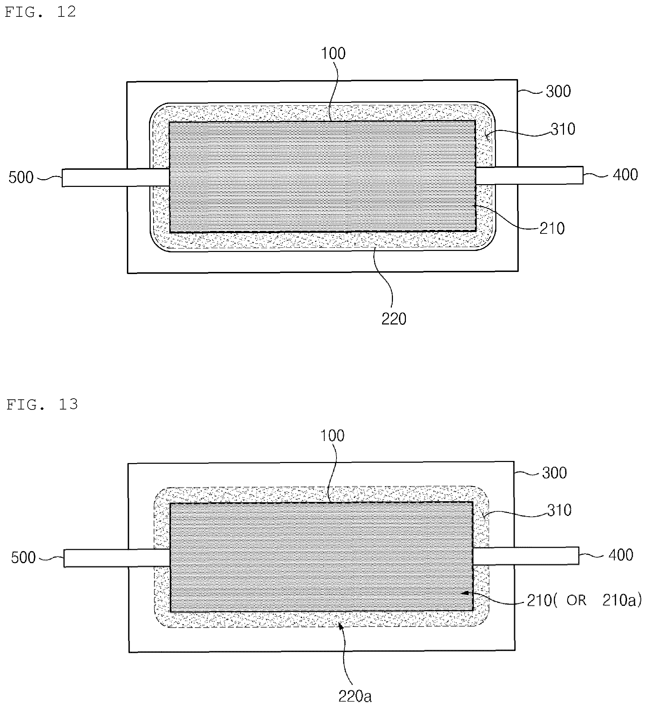

Referring to FIG. 12, after the step S2, the second electrolyte composition 220 is injected into the battery case 300. At this time, the second electrolyte composition 220 includes an oligomer and a second solvent, and the second electrolyte composition 220 does not include lithium bis(fluorosulfonyl)imide and lithium bis(trifluoromethanesulfonyl)imide.

As illustrated in FIG. 12, the second electrolyte composition 220 injected into the battery case 300 may be injected outside of the electrode assembly 100. The second electrolyte composition 220 does not include lithium bis(fluorosulfonyl)imide and lithium bis(trifluoromethanesulfonyl)imide, and thus may not cause a corrosion problem of the electrode tabs 400 and 500 present outside the electrode assembly 100.

The second electrolyte composition 220 includes an oligomer and a second solvent. The second electrolyte composition includes an oligomer, and thus may form a gel polymer electrolyte 220a.

The oligomer may be polymerized and cross-linked by a curing process of the second electrolyte composition.

The oligomer may include one or more selected from the group consisting of a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, polyethylene oxide, polyester sulfide, polyvinyl alcohol, and polyvinylidene fluoride, and specifically, may include at least one selected from a fluorine-based oligomer, a polycarbonate-based oligomer, and a polysiloxane-based oligomer.

For example, the fluorine-based oligomer may specifically include a fluorine-based monomer-derived unit. The fluorine-based oligomer has an advantage of further improving battery stability and having excellent flame retardancy in that a fluorine-based functional group included therein suppresses the generation of oxygen radicals caused by the decomposition of a positive electrode active material. More specifically, the fluorine-based oligomer may include at least one selected from a tetrafluoroethylene (TFE)-vinyl acetate copolymer, a (allyl 1,1,2,2-tetrafluoroethyl ether)-(2,2,2-trifluoro ethyl acrylate) copolymer, a tetrafluoroethylene-(2-vinyl-1,3-dioxolane) copolymer, and a tetrafluoroethylene-vinyl methacrylate copolymer.

In addition, the polycarbonate-based oligomer has advantages of being compatible with a positive electrode, having a structure similar to that of an organic electrolyte solution, and having excellent ionic conductivity or ionic dissociation. The polycarbonate-based oligomer may be polycarbonate having a weight average molecular weight of 1,000 g/mol to 50,000 g/mol, specifically 4,500 g/mol to 30,000 g/mol, and more specifically 10,000 g/mol to 25,000 g/mol.

In addition, the polysiloxane-based oligomer may function as a scavenger of a gas (HF, etc.) generated by an electrolyte side reaction, and thus may have an effect of improving high-temperature storage properties.

The weight average molecular weight of the oligomer may be 1,000 g/mol to 50,000 g/mol, specifically 4,500 g/mol to 30,000 g/mol.

The oligomer may be included in the second electrolyte composition in an amount of 0.1 wt% to 30 wt%, specifically 1 wt% to 10 wt%, and when in the above range, the second electrolyte composition disposed outside the electrode assembly is cured, so that rigidity of a secondary battery may be improved, leakage of the secondary battery may be prevented, and safety of the secondary battery may be further improved.

The type of second solvent may be the same as that exemplified in the first solvent. However, the first solvent and the second solvent may be the same, or may be different from each other.

The second electrolyte composition 220 may further include a second lithium salt to improve the resistance of a secondary battery.

The second lithium salt may include at least one selected from the group consisting of lithium hexafluorophosphate (LiPF₆), lithium perchlorate (LiClO₄), lithium hexafluoroarsenate (LiAsF₆), lithium tetrafluoroborate (LiBF₄), lithium hexafluoroantimonate (LiSbF₆), lithium tetraoxoaluminate (LiAlO₄), lithium tetrachloroaluminate (LiAlCl₄), lithium trifluoromethanesulfonate (LiCF₃SO₃), lithium nonafluorobutanesulfonate (LiC₄F₉SO₃), lithium chloride (LiCl), lithium iodide (LiI), lithium bis(oxalato)borate (LiB(C₂O₄)₂) (LiBOB), lithium bis(pentafluoroethanesulfonyl)imide (LiN(C₂F₅SO₂)₂) (LiBETI), lithium fluoroalkylborate (LiFAB), and lithium 2-trifluoromethyl-4,5-dicyanoimidazole (LiTDI), specifically LiPF₆. At this time, in terms of preventing corrosion of an electrode tab, the second lithium salt may not include lithium bis(fluorosulfonyl)imide and lithium bis(trifluoromethanesulfonyl)imide.

In terms of improving the resistance of a secondary battery, the second lithium salt may be included to have a molar concentration of 0.1 M to 3.0 M, specifically 0.5 M to 1.5 M, with respect to the second electrolyte composition.

### (4) Curing of second electrolyte composition (Step S4)

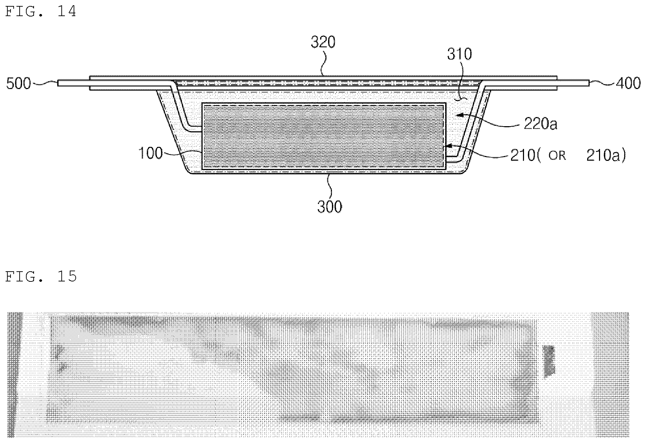

Referring to FIG. 13 and FIG. 14, the second electrolyte composition 220 is cured. The second electrolyte composition 220 injected into the battery case 300 may be cured to form the gel polymer electrolyte 220a. If the first electrolyte composition 210 is a gel polymer electrolyte composition, the first electrolyte composition 210 and the second electrolyte composition 220 may be cured together in the step S4.

As illustrated in FIG. 13 and FIG. 14, after the step S4, the first electrolyte composition may be disposed inside the electrode assembly. At this time, when the first electrolyte composition is a liquid electrolyte composition, the first electrolyte composition may be disposed in an impregnated state inside the electrode assembly. Alternatively, when the first electrolyte composition is a gel polymer electrolyte composition, the first electrolyte composition may be cured and disposed inside the electrode assembly in the form of a gel polymer electrolyte 210a. The gel polymer electrolyte 220a formed from the second electrolyte composition 220 may be disposed outside the electrode assembly 100.

The curing of the second electrolyte composition 220, or the curing of the first electrolyte composition 210 and the second electrolyte composition 220 may be performed by a photocuring process, a thermal curing process, or the like, and specifically, may be performed by a thermal curing process.

The second electrolyte composition 220; or the first electrolyte composition 210 and the second electrolyte composition 220; may be cured in the presence of a polymerization initiator. The polymerization initiator may be used for the purpose of polymerizing oligomers included in an electrolyte composition to form a polymer network in which the oligomers are bonded in a three-dimensional structure.

The polymerization initiator may be included in the second electrolyte composition 220. According to the formation of radicals by the polymerization initiator, a curing process may be performed on the second electrolyte composition.

Meanwhile, the polymerization initiator may not be included in the second electrolyte composition 220, but may be added to the battery case 300 in a separate process to assist in curing the second electrolyte composition 220. Specifically, the manufacturing method of a secondary battery of the present disclosure may further include injecting a polymerization initiator into the battery case 100 before performing the step S4, specifically after performing the step S3 and before performing the step S4. According to the above, pre-gelation, in which the second electrolyte composition is cured by randomly generated radicals without a polymerization initiator, may be prevented, so that it is preferable in terms of sufficient impregnation of the electrode assembly and smooth control of the secondary battery manufacturing process.

The polymerization initiator may be a photopolymerization initiator or a thermal polymerization initiator depending on a polymerization method.

Specifically, the photopolymerization initiator may include, as representative examples thereof, one or more compounds selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-propanone, oxy-phenylacetic acid 2-[2-oxo-2 phenyl-acetoxy-ethoxy]-ethyl ester, oxy-phenyl-acetic 2-[2-hydroxyethoxy]-ethyl ester, alpha-dimethoxy-alpha-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl(2,4,6-trimethylbenzoyl)-phosphine oxide, bis(2,4,6-trimethylbenzoyl)-phenylphosphine oxide, bis(eta 5-2,4-cyclopentadiene-1-yl), bis [2,6-difluoro-3-(1H-pyrrol-1-yl)phenyl]titanium, 4-isobutylphenyl-4'-methylphenyliodonium, hexafluorophosphate, and methylbenzoylformate.

In addition, the thermal polymerization initiator may include, as representative examples thereof, one or more compounds selected from the group consisting of benzoyl peroxide, acetyl peroxide, dilauryl peroxide, di-tert-butyl peroxide, t-butyl peroxy-2-ethyl-hexanoate, cumyl hydroperoxide, and hydrogen peroxide, and at least one selected or more compounds the group consisting of 2,2'-azobis (2-cyanobutane), dimethyl 2,2'-azobis (2-methylpropionate), 2,2'-azobis (methylbutyronitrile), 2,2'-azobis (isobutyronitrile) (AIBN), and 2,2'-azobisdimethyl-valeronitrile (AMVN).

The polymerization initiator may be decomposed by heat of 30 °C to 100 °C in a secondary battery or decomposed by light such as UV at room temperature (5 °C to 30 °C) to form radicals, and may form cross-linking by free radical polymerization to polymerize an oligomer.

The curing may be performed at a temperature of 50 °C to 100 °C for 0.5 hours to 48 hours, preferably at a temperature of 60 °C to 100 °C for 0.5 hours to 24 hours.

Meanwhile, the curing may be performed in a state in which the battery case 300 is sealed. For example, after the battery case 300 in which the electrode assembly 100, the first electrolyte composition 210, and the second electrolyte composition 220 are accommodated is sealed by a cover 320 and the like, the second electrolyte composition 220 may be thermally cured by heat treatment.

After the step S4, the first electrolyte composition 210 is disposed inside the electrode assembly 100, and the second electrolyte composition 220 is cured to form the gel polymer electrolyte 220a, wherein the gel polymer electrolyte 220a may be disposed outside the electrode assembly 100. Since the first electrolyte composition impregnates the inside of the electrode assembly, a decrease in the resistance of the secondary battery may be achieved, and since the second electrolyte composition forms the gel polymer electrolyte outside the electrode assembly, cell rigidity may be improved, and leakage of the electrolyte may be prevented. In addition, the first electrolyte composition 210 includes lithium bis(fluorosulfonyl)imide, but the second electrolyte composition 220 does not contain lithium bis(fluorosulfonyl)imide, so that it is possible to reduce the resistance of the secondary battery, improve thermal stability, and effectively prevent corrosion of an electrode tab.

After the step S4, a process of cooling the cured second electrolyte composition may be further performed. The cooling may be performed, for example, by placing the cured second electrolyte composition at room temperature.

After the step S4, the battery case 300 may be sealed, and the inside of the battery case 300 may be formed in a vacuum atmosphere. According to the formation of the vacuum atmosphere, degassing of gases and the like generated during the curing may be performed.

Hereinafter, embodiments of the present disclosure will be described in detail so that those skilled in the art may easily carry out the present disclosure. However, the present disclosure may be embodied in many different forms, and is not limited to the embodiments set forth herein.

### EXAMPLES AND COMPARATIVE EXAMPLES

Experimental Example A: Using a first electrolyte composition (liquid electrolyte composition) and a second electrolyte composition (gel polymer electrolyte composition)

### Example 1A

### 1. Preparation of separator

Al₂O₃ (average particle diameter (D₅₀): 0.5 µm) as inorganic particles, and an acrylic binder were added to water as a solvent at a weight ratio of 96:4 to prepare a composition for forming a ceramic coating layer. As the acrylic binder, a mixture of JSR's TRD 202A, which is a product name, and APEC's AP-0821, which is a product name, was used.

The composition for forming a ceramic coating layer was applied by Gravure coating on both sides of a polyethylene porous substrate (thickness: 9 µm, average pore diameter: 0.05 um, porosity: 45 vol%) and dried to form a ceramic coating layer (thickness of one layer: 1.5 µm) so as to prepare a separator (thickness: 12 µm = 1.5 um + 9 um + 1.5 µm).

### 2. Manufacturing of electrode assembly

A separator reel on which the separator was wound was unwound, and the separator was seated on a table. Using a first nozzle, an adhesive was applied on the separator in a pattern of a plurality of dots spaced apart from each other. The application area (5.8875 mm²) of the adhesive was 0.002366% with respect to the area (24,889 mm²) of a surface where the separator and a positive electrode were in contact. The adhesive was an acrylate-based adhesive, which is a copolymer including a repeating unit derived from methyl methacrylate (MMA), 2-ethylhexyl acrylate (2-EHA), and 2-hydroxyethyl acrylate (2-HEA) at a weight ratio of 40:30:30. Thereafter, a positive electrode sheet was unwound from a first electrode reel on which the positive electrode sheet had been wound, and then cut with a first cutter to manufacture a positive electrode, and the positive electrode was transferred to a first transfer device to be adsorbed on a first header. The first header was moved toward the table to attach the positive electrode to the separator.

Thereafter, the table was moved laterally, and the separator was folded to one side to cover the positive electrode.

Thereafter, using a second nozzle, the same adhesive as used above was applied on a surface of the separator (the opposite side of the surface where the separator and the positive electrode were in contact) in a pattern of a plurality of dots spaced apart from each other.

Thereafter, a negative electrode sheet was unwound from a second electrode reel on which the negative electrode sheet had been wound, and then cut with a second cutter to manufacture a negative electrode, and the negative electrode was transferred to a second transfer device to be adsorbed on a second header. The second header was moved toward the table to attach the negative electrode to the surface of the separator (the opposite side of the surface where the separator and the positive electrode were in contact).

Thereafter, the table was again moved laterally, and the separator was folded to the other side to cover the negative electrode.

The above process was repeated several times to prepare an electrode assembly in which 18 basic unit bodies, in each of which the separator/the positive electrode/the separator/the negative electrode were sequentially stacked, were stacked. At this time, the separator was folded in a zigzag form.

At this time, an aluminum electrode tab (a positive electrode tap) was connected to the positive electrode, and a nickel electrode tab (a negative electrode tab) was connected to the negative electrode.

At this time, in the case of the positive electrode, Li[Ni_{0.8}Co_{0.1}Mn_{0.1}]O₂ as a positive electrode active material, PVdF as a binder, and carbon black as a conductive material were added to N-methylpyrrolidone (NMP) as a solvent at a weight ratio of 97.5:1.5:1.0 to prepare a positive electrode slurry, and the positive electrode slurry was applied on both sides of an aluminum current collector as a positive electrode current collector, dried, and then roll-pressed to form a positive electrode active material layer.

In addition, in the case of the negative electrode, graphite as a negative electrode active material, styrenebutadiene rubber as a binder, carbon black as a conductive material, and carboxymethylcellulose (CMC) as a thickener were added to water as a solvent at a weight ratio of 95.5:2.5:1.0:1.0 to prepare a negative electrode slurry, and the negative electrode slurry was applied on both sides of a copper current collector as a negative electrode current collector, dried, and then roll-pressed to form a negative electrode active material layer.

### 3. Preparation of electrolyte composition

### (1) Preparation of first electrolyte composition

Lithium bis(fluorosulfonyl)imide (LiFSI) as a 1-1st lithium salt and LiPF₆ as a 1-2nd lithium salt were added to a solvent (in which ethyl carbonate (EC) and ethyl methyl carbonate (EMC) were mixed in a volume ratio of 3:7) to have a molar concentration of 0.7 M and 0.3 M, respectively, so as to prepare a first electrolyte composition.

### (2) Preparation of second electrolyte composition

LiPF₆ as a second lithium salt was added to a second electrolyte composition to have a molar concentration of 1.0 M with respect to the second electrolyte composition, followed by adding trimethylolpropane triacrylate as an oligomer to a solvent (in which ethyl carbonate (EC) and ethyl methyl carbonate (EMC) were mixed in a volume ratio of 3:7) to be 5 wt% of the second electrolyte composition, and azobisisobutyronitrile (AIBN) as a polymerization initiator was added to 0.02 wt% with respect to the weight of the second electrolyte composition so as to prepare a second electrolyte composition.

### 4. Manufacturing of secondary battery

As a battery case, a pouch-type battery case made of aluminum was prepared, and the electrode assembly was stored in an accommodation space of the battery case. At this time, the positive tap and the negative tap were connected to the electrode assembly, and disposed to protrude to the outside of the electrode assembly.

Thereafter, an amount of the first electrolyte composition was calculated and controlled such that only the electrode assembly could be impregnated, and the first electrolyte composition was injected into the battery case to impregnate the electrode assembly. After the injection of the first electrolyte composition, vacuum sealing was performed to impregnate the inside of the electrode assembly at room temperature for 60 hours.

Thereafter, the second electrolyte composition was injected to be disposed outside the electrode assembly. After the injection of the second electrolyte composition, the battery case was vacuum sealed.

Thereafter, the second electrolyte composition injected into the battery case was cured to form a gel polymer electrolyte. The curing was performed by heat treatment at a temperature of 65 °C for 5 hours.

Thereafter, the battery case was cooled, sealed, and degassing to manufacture a secondary battery.

Meanwhile, by the injection of the first electrolyte composition, an adhesive present in the electrode assembly was dissolved and removed by the solvent of the first electrolyte composition. As to be described below, the adhesive was removed and a trace of the adhesive application remained on the separator and the electrode.

### Example 2A

A first electrolyte composition was prepared in the same manner as in Example 1A, except that the 1-1st lithium salt and 1-2nd lithium salt were added to the solvent to have a molar concentration of 0.7 M and 0.7 M, respectively.

A secondary battery was manufactured in the same manner as in Example 1A, except that the first electrolyte composition prepared above was used.

### Example 3A

A first electrolyte composition was prepared in the same manner as in Example 1A, except that the 1-1st lithium salt and 1-2nd lithium salt were added to the solvent to have a molar concentration of 0.6 M and 0.2 M, respectively.

A secondary battery was manufactured in the same manner as in Example 1A, except that the first electrolyte composition prepared above was used, and a process of adding an additional lithium salt was not performed.

### Example 4A

A secondary battery was manufactured in the same manner as in Example 1A, except that the second lithium salt was not added to the second electrolyte composition.

### Example 5A

A secondary battery was manufactured in the same manner as in Example 2A, except that the second lithium salt was not added to the second electrolyte composition.

### Comparative Example 1A

### 1. Preparation of electrolyte composition

An electrolyte composition was prepared in the same manner as in the first electrolyte composition of Example 1A, except that the 1-1st lithium salt was not used, and the 1-2nd lithium salt (LiPF₆) was added to the solvent to have a molar concentration of 1.0 M.

### 2. Manufacturing of secondary battery

As a battery case, a pouch-type battery case made of aluminum was prepared, and the electrode assembly was stored in an accommodation space of the battery case. At this time, the positive tap and the negative tap were connected to the electrode assembly, and disposed to protrude to the outside of the electrode assembly. The battery case, the electrode assembly, the positive tab, and the negative tab used above are the same as those used in Example 1A.

Thereafter, the electrolyte composition prepared above was injected into the inner space of the battery case, and vacuum-sealed to impregnate the inside of the electrode assembly at room temperature for 60 hours.

Thereafter, the battery case was cooled, sealed, and degassing to manufacture a secondary battery.

The manufacturing of the secondary battery manufactured above differs from Example 1A In that one type of electrolyte composition was injected into the battery case in one step without using two different types of electrolyte compositions, and only a liquid electrolyte was used without applying a gel polymer electrolyte.

### Comparative Example 2A

### 1. Preparation of electrolyte composition

An electrolyte composition was prepared in the same manner as in the first electrolyte composition of Example 1A, except that the 1-2nd lithium salt was not used, and the 1-1st lithium salt (LiFSI) was added to the solvent to have a molar concentration of 1.0 M.

### 2. Manufacturing of secondary battery

As a battery case, a pouch-type battery case made of aluminum was prepared, and the electrode assembly was stored in an accommodation space of the battery case.

Thereafter, the electrolyte composition prepared above was injected into the inner space of the battery case, and vacuum-sealed to impregnate the inside of the electrode assembly at room temperature for 60 hours.

Thereafter, the battery case was cooled, sealed, and degassing to manufacture a secondary battery.

The manufacturing of the secondary battery manufactured above differs from Example 1A In that one type of electrolyte composition was injected into the battery case in one step without using two different types of electrolyte compositions, and only a liquid electrolyte was used without applying a gel polymer electrolyte.

### Comparative Example 3A

### 1. Preparation of electrolyte composition

An electrolyte composition was prepared in the same manner as in the first electrolyte composition of Example 1A, except that the 1-1st lithium salt and the 1-2nd lithium salt were added to the solvent to have a molar concentration of 0.3 M and 0.7 M, respectively.

### 2. Manufacturing of secondary battery

As a battery case, a pouch-type battery case made of aluminum was prepared, and the electrode assembly was stored in an accommodation space of the battery case.

Thereafter, the electrolyte composition prepared above was injected into the inner space of the battery case, and vacuum-sealed to impregnate the inside of the electrode assembly at room temperature for 60 hours.

Thereafter, the battery case was cooled, sealed, and degassing to manufacture a secondary battery.

The manufacturing of the secondary battery manufactured above differs from Example 1A In that one type of electrolyte composition was injected into the battery case in one step without using two different types of electrolyte compositions, and only a liquid electrolyte was used without applying a gel polymer electrolyte.

### Experimental Example 1A. Observation of trace of adhesive application on surface of separator

In the secondary battery of Example 1A, the separator corresponding to the surface where the electrode and the separator were in contact was cut, and the surface thereof was observed. A photograph of the surface of the separator separated from the secondary battery of Example 1A is shown in FIG. 15.

As can be seen in FIG. 15, a trace of the adhesive application was observed in the photograph of the surface of the separator of Example 1A.

### Experimental Example 2A. Evaluation of resistance

In the secondary battery of each of Examples 1A to 5A, and Comparative Examples 1A to 3A, resistance values were calculated using voltage change amounts (ΔV) measured when discharging was performed for 10 seconds at a rate of 2.5 C at SOC 50%.

When the resistance value of the secondary battery of Comparative Example 1A was set to 100%, relative ratios of the resistance values of the secondary batteries of Examples 1A to 5A, and Comparative Example 1A to Comparative Example 3A are shown in Table 1 below.

### Experimental Example 3A. Observation of tap corrosion

The secondary battery manufactured in each of Examples 1A to 5A and Comparative Examples 1A to 3A was fully charged and then stored at 60 °C for 2 weeks to visually observe whether there was corrosion in the positive electrode tab. Five secondary batteries of Examples 1A to 5A and Comparative Examples 1A to 3A were prepared, respectively, and the above experiment was performed five times.

When there was no corrosion in the positive electrode tab, it was evaluated as "Pass," and when there was corrosion, it was evaluated as "Fail," and the number of times evaluated as "Pass" out of the total number of experiments (marked as Total, 5 times) is shown in Table 1.

### Experimental Example 4A. Measurement of leakage amount

The amount of leakage of the electrolyte was measured for each of Examples 1A to 5A, and Comparative Examples 1A to 3A. A side portion of each secondary battery was cut by 5 cm, and an amount of the electrolyte leaked from each secondary battery was measured when the incision was left for 3 days by having the incision portion as the bottom. The results are shown in Table 1 below.

**[Table 1]**

| | Experimental Example 2A | Experimental Example 3A | Experimental Example 4A |
|---|---|---|---|
| | Relative ratio (5) to resistance value of Comparative Example 1 | Tab corrosion observation (Pass/Total) | Leakage amount measurement |
| Example 1A | 93.3 | 0/5 | Less than 1 g |
| Example 2A | 92.2 | 0/5 | Less than 1 g |
| Example 3A | 98.1 | 0/5 | Less than 1 g |
| Example 4A | 93.9 | 0/5 | Less than 1 g |
| Example 5A | 93.1 | 0/5 | Less than 1 g |
| Comparative Example 1A | 100.0 | 0/5 | 15.1 g |
| Comparative Example 2A | 91.2 | 5/5 | 17.3 g |
| Comparative Example 3A | 97.4 | 5/5 | 12.3 g |

Referring to Table 1, in the secondary batteries of Examples 1A-5 A, resistance was reduced, tap corrosion was not observed, and electrolyte leakage hardly occurred.

However, in the case of Comparative Example 1A, since lithium bis(fluorosulfonyl)imide was not used, corrosion of the electrode tab did not occur, but resistance was greatly increased, and since a gel polymer electrolyte was not disposed outside the electrode assembly, a significant amount of the electrolyte leaked to the outside of the secondary battery.

In addition, in Comparative Examples 2A and 3A, since lithium bis(fluorosulfonyl)imide was disposed outside the electrode assembly to be in contact with the electrode tab, corrosion of the electrode tab was observed, which is not preferable, and since a gel polymer electrolyte was not disposed outside the electrode assembly, a significant amount of the electrolyte leaked to the outside of the secondary battery.

### Experimental Example B: Using a first electrolyte composition (gel polymer electrolyte composition) and second electrolyte composition (gel polymer electrolyte composition)

### Example 1B

### 1. Preparation of separator

Al₂O₃ (average particle diameter (D₅₀): 0.5 µm) as inorganic particles, and an acrylic binder were added to water as a solvent at a weight ratio of 96:4 to prepare a composition for forming a ceramic coating layer. As the acrylic binder, a mixture of JSR's TRD 202A, which is a product name, and APEC's AP-0821, which is a product name, was used.

The composition for forming a ceramic coating layer was applied by Gravure coating on both sides of a polyethylene porous substrate (thickness: 9 µm, average pore diameter: 0.05 um, porosity: 45 vol%) and dried to form a ceramic coating layer (thickness of one layer: 1.5 µm) so as to prepare a separator (thickness: 12 µm = 1.5 um + 9 um + 1.5 µm).

### 2. Manufacturing of electrode assembly

A separator reel on which the separator was wound was unwound, and the separator was seated on a table. Using a first nozzle, an adhesive was applied on the separator in a pattern of a plurality of dots spaced apart from each other. The application area (5.8875 mm²) of the adhesive was 0.002366% with respect to the area (24,889 mm²) of a surface where the separator and a positive electrode were in contact. The adhesive was an acrylate-based adhesive, which is a copolymer including a repeating unit derived from methyl methacrylate (MMA), 2-ethylhexyl acrylate (2-EHA), and 2-hydroxyethyl acrylate (2-HEA) at a weight ratio of 40:30:30. Thereafter, a positive electrode sheet was unwound from a first electrode reel on which the positive electrode sheet had been wound, and then cut with a first cutter to manufacture a positive electrode, and the positive electrode was transferred to a first transfer device to be adsorbed on a first header. The first header was moved toward the table to attach the positive electrode to the separator.

Thereafter, the table was moved laterally, and the separator was folded to one side to cover the positive electrode.

Thereafter, using a second nozzle, the same adhesive as used above was applied on a surface of the separator (the opposite side of the surface where the separator and the positive electrode were in contact) in a pattern of a plurality of dots spaced apart from each other.

Thereafter, a negative electrode sheet was unwound from a second electrode reel on which the negative electrode sheet had been wound, and then cut with a second cutter to manufacture a negative electrode, and the negative electrode was transferred to a second transfer device to be adsorbed on a second header. The second header was moved toward the table to attach the negative electrode to the surface of the separator (the opposite side of the surface where the separator and the positive electrode were in contact).

Thereafter, the table was again moved laterally, and the separator was folded to the other side to cover the negative electrode.

The above process was repeated several times to prepare an electrode assembly in which 18 basic unit bodies, in each of which the separator/the positive electrode/the separator/the negative electrode were sequentially stacked, were stacked. At this time, the separator was folded in a zigzag form.

At this time, an aluminum electrode tab (a positive electrode tap) was connected to the positive electrode, and a nickel electrode tab (a negative electrode tab) was connected to the negative electrode.

At this time, in the case of the positive electrode, Li[Ni_{0.8}Co_{0.1}Mn_{0.1}]O₂ as a positive electrode active material, PVdF as a binder, and carbon black as a conductive material were added to N-methylpyrrolidone (NMP) as a solvent at a weight ratio of 97.5:1.5:1.0 to prepare a positive electrode slurry, and the positive electrode slurry was applied on both sides of an aluminum current collector as a positive electrode current collector, dried, and then roll-pressed to form a positive electrode active material layer.

In addition, in the case of the negative electrode, graphite as a negative electrode active material, styrenebutadiene rubber as a binder, carbon black as a conductive material, and carboxymethylcellulose (CMC) as a thickener were added to water as a solvent at a weight ratio of 95.5:2.5:1.0:1.0 to prepare a negative electrode slurry, and the negative electrode slurry was applied on both sides of a copper current collector as a negative electrode current collector, dried, and then roll-pressed to form a negative electrode active material layer.

### 3. Preparation of gel polymer electrolyte

### (1) Preparation of first gel electrolyte composition

Lithium bis(fluorosulfonyl)imide (LiFSI) as the 1-1st lithium salt and LiPF₆ as the 1-2nd lithium salt were added to a solvent (in which ethyl carbonate (EC) and ethyl methyl carbonate (EMC) were mixed in a volume ratio of 3:7) to have a molar of 0.9 M and 0.3 M, respectively, and trimethylolpropane triacrylate as an oligomer was added to the solvent to be 5 wt% with respect to the weight of the composition, and azobisisobutyronitrile (AIBN) as a polymerization initiator was added to the solvent to be 0.02 wt% with respect to the weight of the composition so as to prepare a first gel polymer electrolyte composition.

### (2) Preparation of second gel electrolyte composition

A second gel polymer electrolyte composition was prepared in the same manner as the first gel polymer electrolyte composition, except that the 1-1st lithium salt and the 1-2nd lithium salt were not included.

### 4. Manufacturing of secondary battery

As a battery case, a pouch-type battery case made of aluminum was prepared, and the electrode assembly was stored in an accommodation space of the battery case. At this time, the positive tap and the negative tap were connected to the electrode assembly, and disposed to protrude to the outside of the electrode assembly.

Thereafter, an amount of the first gel polymer electrolyte composition was calculated and controlled such that only the electrode assembly could be impregnated, and the first gel polymer electrolyte composition was injected into the battery case to impregnate the electrode assembly. After the injection of the first gel polymer electrolyte composition, vacuum sealing was performed to impregnate the inside of the electrode assembly at room temperature for 60 hours.

Thereafter, the second gel polymer electrolyte composition was injected to be disposed outside the electrode assembly. The second gel polymer electrolyte composition was injected and then vacuum sealed.

Thereafter, the first gel polymer electrolyte composition and the second gel polymer electrolyte composition injected into the battery case were cured. The curing was performed by heat treatment at a temperature of 65 °C for 5 hours.

Thereafter, the battery case was cooled, sealed, and degassing to manufacture a secondary battery.

Meanwhile, by the injection of the first gel polymer electrolyte composition, an adhesive present in the electrode assembly was dissolved and removed by the solvent of the first gel polymer electrolyte composition. As to be described below, the adhesive was removed and a trace of the adhesive application remained on the separator and the electrode.

### Example 2B

A first gel polymer electrolyte composition was prepared in the same manner as in Example 1B, except that the 1-1st lithium salt and 1-2nd lithium salt were added to the solvent to have a molar concentration of 0.8 M and 0.4 M, respectively.

A secondary battery was manufactured in the same manner as in Example 1B, except that the first gel polymer electrolyte composition prepared above was used.

### Example 3B

A first gel polymer electrolyte composition was prepared in the same manner as in Example 1B, except that the 1-1st lithium salt and 1-2nd lithium salt were added to the solvent to have a molar concentration of 0.7 M and 0.5 M, respectively.

A secondary battery was manufactured in the same manner as in Example 1B, except that the first gel polymer electrolyte composition prepared above was used.

### Example 4B

A first gel polymer electrolyte composition was prepared in the same manner as in Example 1B, except that the 1-1st lithium salt and 1-2nd lithium salt were added to the solvent to have a molar concentration of 0.6 M and 0.2 M, respectively.

A secondary battery was manufactured in the same manner as in Example 1B, except that the first gel polymer electrolyte composition prepared above was used.

### Comparative Example 1B

### 1. Manufacturing of electrode assembly

An electrode assembly was manufactured in the same manner as in Example 1B.

### 2. Preparation of gel polymer electrolyte

A gel polymer electrolyte composition was prepared in the same manner as in the first gel polymer electrolyte composition of Example 1B, except that the 1-1st lithium salt was not used, and the 1-2nd lithium salt (LiPF₆) was added to the solvent to have a molar concentration of 1.0 M.

### 3. Manufacturing of secondary battery

As a battery case, a pouch-type battery case made of aluminum was prepared, and the electrode assembly was stored in an accommodation space of the battery case. At this time, the positive tap and the negative tap were connected to the electrode assembly, and disposed to protrude to the outside of the electrode assembly. The battery case, the electrode assembly, the positive tab, and the negative tab used above are the same as those used in Example 1B.

Thereafter, the gel polymer electrolyte composition prepared above was injected into the inner space of the battery case, and vacuum-sealed to impregnate the inside of the electrode assembly at room temperature for 60 hours.

Thereafter, the gel polymer electrolyte composition injected into the battery case was cured. The curing was performed by heat treatment at a temperature of 65 °C for 5 hours.

Thereafter, the battery case was cooled, sealed, and degassing to manufacture a secondary battery.

The manufacturing of the secondary battery manufactured above differs from Example 1B In that one type of gel polymer electrolyte composition was injected into the battery case in one step and cured without using two different types of gel polymer electrolyte compositions.

### Comparative Example 2B

Instead of the second gel polymer electrolyte composition prepared in Example 1B, the same as the first gel polymer electrolyte composition prepared in Example 1B was prepared as a second gel polymer electrolyte composition.

A secondary battery was manufactured in the same manner as in Example 1B, except that the second gel polymer electrolyte composition prepared above was used.

### EXPERIMENTAL EXAMPLES

### Experimental Example 1B: Evaluation of resistance

In the secondary battery of each of Examples 1B to 4B, Comparative Example 1B, and Comparative Example 2B, resistance values were calculated using voltage change amounts (ΔV) measured when discharging was performed for 10 seconds at a rate of 2.5 C at SOC 50%, and the results are shown in Table 2 below.

### Experimental Example 2B: Evaluation of thermal stability

The secondary battery of each of Examples 1B to 4B, Comparative Example 1B, and Comparative Example 2B was fully charged with SOC 100%, placed in a hot box, heated at a rate of 0.5 °C/min, and maintained for 2 hours after the temperature inside the hot box reached 150 °C to evaluate whether ignition occurred.

When there was no ignition, it was evaluated as "Pass," and when there was ignition, it was evaluated as "Fail," and the results are shown in Table 2.

### Experimental Example 3B: Observation of tap corrosion

The secondary battery manufactured in each of Examples 1B to 4B, Comparative Examples 1B, and Comparative Example 2B was fully charged and then stored at 60 °C for 2 weeks to visually observe whether there was corrosion in the positive electrode tab.

When there was no corrosion in the positive electrode tab, it was evaluated as "Pass," and when there was corrosion, it was evaluated as "Fail," and the results are shown in Table 2.

**[Table 2]**

| | Experimental Example 1B | Experimental Example 2B | Experimental Example 3B |
|---|---|---|---|
| | Resistance (mΩ) | Thermal stability test (Pass/Fail) | Tab corrosion observation (Pass/Fail) |
| Example 1B | 2.18 | Pass | Pass |
| Example 2B | 2.20 | Pass | Pass |
| Example 3B | 2.21 | Pass | Pass |
| Example 4B | 2.48 | Pass | Pass |
| Comparative Example 1B | 2.40 | Fail | Pass |
| Comparative Example 2B | 2.17 | Pass | Fail |

Referring to Table 2, it can be confirmed that in the secondary batteries of Examples 1B to 3B, resistance was reduced, thermal stability was excellent, and tap corrosion was not observed.

Meanwhile, Example 4B had slightly increased resistance compared to Examples 1B to 3B, but is excellent in terms of thermal stability and tab corrosion prevention.

However, in the case of Comparative Example 1B, since lithium bis(fluorosulfonyl)imide was not used, and thus, showed very poor thermal stability.

In addition, in Comparative Example 2B, since the lithium bis(fluorosulfonyl)imide was disposed outside the electrode assembly to be in contact with the electrode tab, corrosion of the electrode tab was observed, which is not preferable.

### Description of Reference Numerals

100: Electrode assembly
U: Basic unit body
110: First electrode
110a: One end of first electrode
120: Second electrode
120a: One end of second electrode
130: Separator
131: Porous substrate
132a, 132b: Ceramic coating layer
140: Coated adhesive
210: First electrolyte composition
220: Second electrolyte composition
220a: Gel polymer electrolyte
300: Battery case
310: Cup portion
320: Cover
400, 500: Electrode tab
610: First electrode reel
620: Second electrode reel
630: Separator reel
700: Table
810: First cutter
820: Second cutter
910: First transfer device
920: Second transfer device
1010: First header
1020: Second header
1101: First electrode sheet
1201: Second electrode sheet
1110: First nozzle
1120: Second nozzle

## Claims

1. A method for manufacturing a secondary battery, the method comprising:
(S1) accommodating an electrode assembly in a battery case;
(S2) injecting a first electrolyte composition into the battery case to impregnate the electrode assembly;
(S3) injecting a second electrolyte composition into the battery case; and
(S4) curing the second electrolyte composition, wherein,
an electrode tab is connected to the electrode assembly, wherein the electrode tab protrudes to an outside of the electrode assembly,
the first electrolyte composition includes a 1-1st lithium salt containing at least one selected from the group consisting of lithium bis(fluorosulfonyl)imide (LiFSI) and lithium bis(trifluoromethanesulfonyl)imide (LiTFSI), and a first solvent,
the second electrolyte composition includes an oligomer and a second solvent, and the second electrolyte composition does not include lithium bis(fluorosulfonyl)imide (LiFSI) and lithium bis(trifluoromethanesulfonyl)imide (LiTFSI).

2. The method of claim 1, wherein the first electrolyte composition comprises a liquid electrolyte composition.

3. The method of claim 1, wherein:
the first electrolyte composition is a gel polymer electrolyte composition, and
the first electrolyte composition further comprises an oligomer.

4. The method of claim 3, wherein in the step (S4), the first electrolyte composition and the second electrolyte composition are cured together.

5. The method of claim 3, further comprising curing the first electrolyte composition after the step (S2).

6. The method of claim 1, wherein the first electrolyte composition further comprises a 1-2nd lithium salt containing at least one selected from the group consisting of lithium hexafluorophosphate (LiPF₆), lithium perchlorate (LiClO₄), lithium hexafluoroarsenate (LiAsF₆), lithium tetrafluoroborate (LiBF₄), lithium hexafluoroantimonate (LiSbF₆), lithium tetraoxoaluminate (LiAlO₄), lithium tetrachloroaluminate (LiAlCl₄), lithium trifluoromethanesulfonate (LiCF₃SO₃), lithium nonafluorobutanesulfonate (LiC₄F₉SO₃), lithium chloride (LiCl), lithium iodide (LiI), lithium bis(oxalato)borate (LiB(C₂O₄)₂), lithium bis(pentafluoroethanesulfonyl)imide (LiN(C₂F₅SO₂)₂), lithium fluoroalkylborate (LiFAB), and lithium 2-trifluoromethyl-4,5-dicyanoimidazole (LiTDI).

7. The method of claim 1, wherein the second electrolyte composition further comprises a second lithium salt, wherein the second lithium salt comprises at least one selected from the group consisting of lithium hexafluorophosphate (LiPF₆), lithium perchlorate (LiClO₄), lithium hexafluoroarsenate (LiAsF₆), lithium tetrafluoroborate (LiBF₄), lithium hexafluoroantimonate (LiSbF₆), lithium tetraoxoaluminate (LiAlO₄), lithium tetrachloroaluminate (LiAlCl₄), lithium trifluoromethanesulfonate (LiCF₃SO₃), lithium nonafluorobutanesulfonate (LiC₄F₉SO₃), lithium chloride (LiCl), lithium iodide (LiI), lithium bis(oxalato)borate (LiB(C₂O₄)₂), lithium bis(pentafluoroethanesulfonyl) imide (LiN(C₂F₅SO₂)₂), lithium fluoroalkylborate (LiFAB), and lithium 2-trifluoromethyl-4,5-dicyanoimidazole (LiTDI).

8. The method of claim 1, wherein the oligomer comprises at least one selected from the group consisting of a fluorine-based oligomer, a polycarbonate-based oligomer, and a polysiloxane-based oligomer.

9. The method of claim 1, wherein the second electrolyte composition further comprises a polymerization initiator.

10. The method of claim 1, wherein the electrode tab comprises aluminum.

11. The method of claim 1, wherein the first electrolyte composition is injected so as not to contact the electrode tab.

12. The method of claim 1, wherein in the step (S3), the second electrolyte composition is injected outside of the electrode assembly.

13. The method of claim 1, wherein,
the first electrolyte composition is disposed inside the electrode assembly after the step (S4), and
the second electrolyte composition is cured to form a gel polymer electrolyte, wherein the gel polymer electrolyte is disposed outside the electrode assembly.

14. The method of claim 1, wherein in the electrode assembly, an electrode and a separator are alternately stacked, and an adhesive is applied to the surface of at least one of the electrode and the separator such that the electrode and the separator are bonded to each other.

15. The method of claim 14, wherein the separator comprises a porous substrate and a ceramic coating layer disposed on both sides of the porous substrate, wherein the ceramic coating layer includes inorganic particles in an amount of 92 wt% to less than 100 wt% and a binder in an amount of greater than 0 wt% to 8 wt%.

16. The method of claim 14, wherein the adhesive is applied in the form of a plurality of patterns spaced apart from each other.

17. The method of claim 14, wherein the adhesive is dissolved in the first electrolyte composition according to the injection of the first electrolyte composition.

18. The method of claim 17, wherein after the adhesive is dissolved, a trace of the adhesive application is present on the surface of one of the separator and the electrode.

19. The method of claim 14, wherein:
the electrode comprises a first electrode and a second electrode; and
the electrode assembly is manufactured by a method including the following (a) to (d) steps:
(a) applying the adhesive on at least a portion of the separator and the first electrode;
(b) bonding the separator and the first electrode through the applied adhesive;
(c) folding one side of the separator to cover the first electrode;
(d) applying the adhesive on at least a portion of the separator and the second electrode;
(e) bonding the separator and the second electrode through the applied adhesive; and
(d) folding the other side of the separator to cover the second electrode.
